# EUROPEAN PATENT SPECIFICATION

(11) **EP 4 481 530 B1**
(45) Date of publication and mention of the grant of the patent: **19.11.2025**
(21) Application number: 24166963.9
(22) Date of filing: 27.03.2024
(51) Int. Cl.: G05D 1/622, G05D 1/85

(54) **AIR VEHICLE CONTROL TO AVOID COLLISION AGAINST OBJECTS UPON POTENTIAL FAILURE**
LUFTFAHRZEUGSTEUERUNG ZUR VERMEIDUNG VON KOLLISIONEN GEGEN OBJEKTE BEI POTENZIELLEM AUSFALL
COMMANDE DE VÉHICULE AÉRIEN POUR ÉVITER UNE COLLISION AVEC DES OBJETS LORS D'UNE DÉFAILLANCE POTENTIELLE

(30) Priority: 20.06.2023 US 202318338274
(43) Date of publication of application: 25.12.2024
(73) Proprietor: The Boeing Company, Arlington, VA 22202 (US)
(72) Inventor: Fransoy Pereira, Alejandro, Arlington, 22202 (US); Vidal Franco, José Ignacio, Arlington, 22202 (US); Valls Hernández, Ernesto, Arlington, 22202 (US)
(74) Representative: Witte, Weller & Partner Patentanwälte mbB

(56) References cited:
- CN-U- 214 397 257
- US-A1- 2018 022 310
- US-A1- 2021 295 554

## Description

### FIELD

Aspects of the present disclosure relate to vehicle control, and more specifically aspects of the invention relate to air vehicle (e.g., unmanned aerial vehicle (UAV)) control to avoid collision against objects on the ground in the case of air vehicle failure.

### BACKGROUND

Safety and risk assessment for UAVs, and other air vehicles, is critically important. To reduce this risk, governmental regulations in various jurisdictions require a UAV operator to undertake a risk assessment (e.g., a Specific Operations Risk Assessment (SORA)) for operation of the UAV. This can include a ground risk assessment that determines the risk to objects (e.g., any animate or inanimate object, including persons, animals, obstacles, structures, vehicles, and any other suitable objects) protruding from the ground, from operation of the UAV. For example, a loss of propulsion by the UAV could cause the air vehicle to lose control and fall to the ground, or otherwise impact (e.g., collide with) objects on the ground. In one aspect, a loss of propulsion can be caused by a loss of power, a loss of engine, an air collision, a projectile impact, or any other causational occurrence. One or more techniques described herein can be used to reduce the impact of potential UAV failure (e.g., loss of propulsion) on objects on the ground.

Document US 2021/0295554 A1, according to its abstract, states to intend to allow an orientation of a mobile device observed in imaging data to be more appropriately specified. There is provided an information processing device including an acquisition unit that acquires the imaging data and a direction specification unit that analyzes the imaging data to specify the orientation of the mobile device observed in the imaging data.

### SUMMARY

Embodiments include a method. The method includes receiving a flight state for an air vehicle. The method further includes identifying an object on the ground, using one or more sensors. The method further includes determining a risk that the air vehicle will collide with the object should the air vehicle later lose propulsion. The method further includes protecting against the air vehicle colliding with the object, based on the determined risk.

Embodiments further include a non-transitory computer-readable medium containing computer program code that, when executed by operation of one or more computer processors, performs operations. The operations include receiving a flight state for an air vehicle. The operations further include identifying an object on the ground, using one or more sensors. The operations further include determining a risk that the air vehicle will collide with the object should the air vehicle later lose propulsion. The operations further include protecting against the air vehicle colliding with the object, based on the determined risk.

Embodiments further include an unmanned aerial vehicle (UAV), including a computer processor and a memory having instructions stored thereon which, when executed on the computer processor, performs operations. The operations include identifying a flight state for the UAV. The operations further include receiving a corrected flight state for the UAV, wherein the corrected flight state is calculated based on identifying an object on the ground using one or more sensors and determining a risk that the UAV will collide with the object should the UAV later lose propulsion. The operations further include automatically controlling the UAV to operate using the corrected flight state.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
Figure 1 illustrates an unmanned air vehicle system to avoid collision by an air vehicle against objects on the ground, according to one aspect.
Figure 2 illustrates a block diagram of a controller for controlling an unmanned air vehicle to avoid collision against objects on the ground, according to one aspect.
Figure 3 is a flowchart illustrating controlling an unmanned air vehicle to avoid collision against objects on the ground, according to one aspect.
Figure 4 illustrates an example of controlling an unmanned air vehicle to avoid collision against objects on the ground, according to one aspect.
Figure 5 is a flowchart illustrating protecting against collision by an unmanned air vehicle against objects on the ground, according to one aspect.

### DETAILED DESCRIPTION

The present disclosure describes techniques to avoid an air vehicle (e.g., a UAV) impacting (e.g., colliding with) objects below the air vehicle (e.g., on the ground) in the event of a loss of propulsion. In an embodiment, objects can include any animate or inanimate object, including persons, animals, obstacles, structures, vehicles, and any other suitable objects. As discussed above, reducing ground risk from a UAV is extremely important. Existing solutions typically try to reduce ground risk by reducing the negative effect of a collision by the UAV with objects on the ground. For example, flight termination systems (FTSs), such as bulky parachutes or airbags, can be included in the UAV and used to slow the UAV in descent or reduce the force of a collision with objects on the ground. But these FTS add significant weight and drag to the UAV, greatly reducing its range (among other drawbacks).

As another example, ground risk safety buffers can be used to limit the area of operation of the UAV, to effectively avoid critical ground objects.

A ground risk safety buffer can be defined as an area around the operational area for the UAV that operates as the last area to contain a UAV that has exited both the operational and contingency areas. The UAV is expected to land within the boundaries of the ground risk safety buffer area (e.g., using an FTS to control landing). The size of this buffer is subject to the combination of hardware, software and procedural measures employed for the UAV. Generally speaking, the higher the robustness, the smaller the buffer required, and buffers are typically calculated manually (e.g., prior to operation of a UAV). But this significantly limits the area of operation for the UAV as density of population, and other factors, impacts the required ground risk safety buffer. Further, it can increase fuel and operating costs by changing UAV flight paths. For example, avoiding large safety buffers can require modified and inefficient flight paths that increase fuel and operating costs.

Other existing solutions to reduce the effects of UAV failure focus on improving the reliability of UAVs, to avoid a loss of propulsion or other failure. For example, existing solutions may add redundancy to navigation or propulsion, to avoid UAV loss of propulsion. But this does not eliminate the risks to objects on the ground, in the event a loss of propulsion does indeed occur.

One or more techniques described herein detect exposed objects below the air vehicle. For example, an a air vehicle, a ground station, or any other suitable control system can use artificial intelligence (AI) machine learning (ML) techniques to detect exposed objects and their trajectories on the ground, in real-time during the operation of the air vehicle. The control system can compute the potential falling trajectory of the air vehicle, also in real time. Accordingly, when the air vehicle is at risk of colliding with an exposed object on the ground, the control system can take steps to protect against the collision. For example, the control system can make changes to the air vehicle trajectory while the air vehicle is operating, to reduce any risk of collision in the case of a later, hypothetical, sudden loss of propulsion. Alternatively, or in addition, the control system can alert a pilot or other operator of the risk so that evasive action(s) can be taken. In this way the collision on the ground is contained to avoid exposed objects, without needing to equip the air vehicle with a bulky parachute or airbag and while reducing otherwise necessary safety buffers.

One or more of these techniques have significant technical benefits. For example, the techniques greatly reduce the risk of an air vehicle crashing into objects upon loss of propulsion or other failure while still providing flexibility to the operator by reducing the size or necessary safety buffers. Further, one or more techniques can reduce pilot workload significantly by implementing corrections autonomously, and can eliminate the burden of mounting FTSs, such as bulky parachutes or airbags, in turn reducing weight and fuel required for the air vehicle.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects, benefits and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module," "service," or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the basic scope thereof, and the scope thereof is determined by the claims that follow.

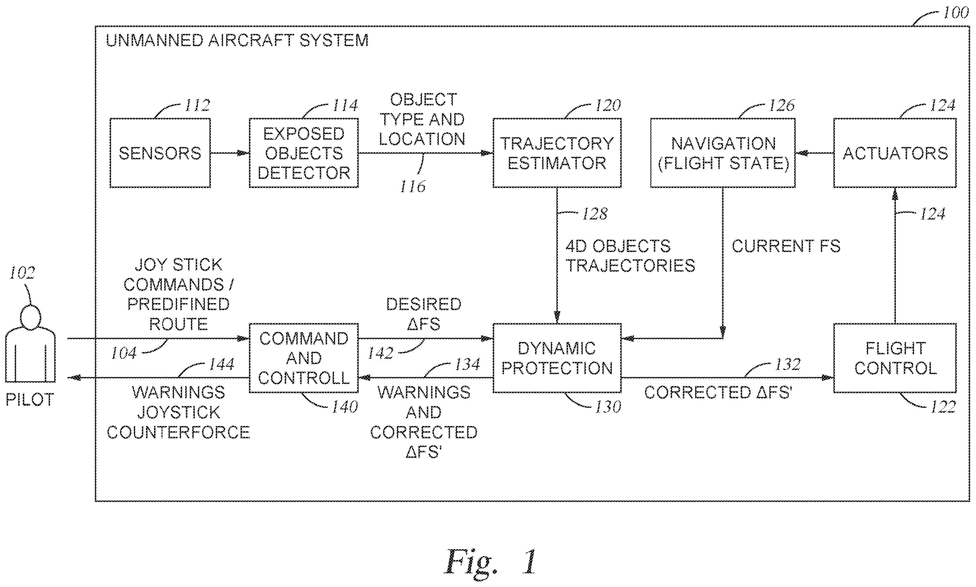

Figure 1 illustrates an unmanned air vehicle system 100 to avoid collision by an air vehicle against objects on the ground, according to one aspect. Prior to starting a flight, a pilot 102 (e.g., a human pilot) can initiate the flight for the air vehicle. For example, the pilot 102 can do so by providing commands 104 to the unmanned air vehicle system, both to initiate the flight and to control the flight during operation. The commands 104 can include joystick commands, a predefined route for the air vehicle (e.g., within a particular airspace), or any other suitable command or commands.

The air vehicle (e.g., a UAV) can then take off and begin operation. Once the UAV is in the air, a command and control unit 140 can calculate variations to the current flight state (FS) for the air vehicle (e.g., altitude, velocity, course) for the UAV to follow the desired route, whether this is a predefined route or corresponds to ongoing commands from the pilot 102 (e.g., joystick commands). The command and control unit 140 provides a desired flight state (ΔFS) 142 to a dynamic protection module 130. In an embodiment, a ΔFS includes both a change to the flight state, and no-change to the flight state. For example, the command and control unit 140 can repeatedly (e.g., continuously, at defined intervals, or using any other suitable technique) identify a ΔFS (e.g., continuation on a current flight plan or a modified flight plan).

In parallel, an exposed objects detector 114 identifies potentially exposed objects (e.g., on the ground or below the UAV). For example, the exposed objects detector 114 can receive data from one or more sensors 112. The sensors 112 can include infrared sensors, radar sensors, LIDAR sensors, visible spectrum sensors (e.g., visible spectrum cameras), or any other suitable sensors. In an aspect, as discussed further below, the exposed objects detector 114 uses suitable ML techniques to identify exposed objects. For example, the exposed objects detector 114 can use a deep learning neural network (DNN) or another suitable ML technique (e.g., a supervised ML model) to identify objects using data from the sensors 112. This can include image object detection (e.g., from one or more visible spectrum cameras), or any other suitable ML technique. The use of ML is merely one example, and the exposed objects detector 114 can use any suitable technique or combination of techniques known to those of ordinary skill in the art without undue experimentation in order to identify exposed objects.

In one aspect, the exposed objects detector 114 provides object type and location data 116 to a trajectory estimator. The trajectory estimator 120 estimates the four-dimensional (e.g., in three dimensions over time) trajectory of exposed objects detected at block 114. For example, the trajectory estimator 120 can identify movement patterns for the objects. In one aspect, the exposed objects detector 114 uses suitable ML techniques to estimate the object trajectories. This is merely an example, and any suitable technique or combination of techniques known to those of ordinary skill in the art without undue experimentation can be used.

Alternatively, or in addition, the trajectory estimator 120 (or any other suitable module) can compute dynamic sized safety buffers around the exposed objects identified at block 114. For example the trajectory estimator 120 can compute real-time safety buffer sizing requirements based on the characteristics of the object (e.g., the potential danger to the object, the movement speed of the object, the likelihood of movement by the object, and any other suitable characteristics) and the characteristics of the air vehicle (e.g., the UAV). For example, the trajectory estimator 120 will compute a different dynamic safety buffer for a standing person, as compared to a person riding a bicycle or a fast-moving car, and the buffers will be dependent on the speed, size, mass and other suitable characteristics of the air vehicle.

In an aspect, a flight control module 122 can operate actuators 124 in the air vehicle, to control the current FS, and a navigation module 126 can provide current FS information to the dynamic protection module 130. The dynamic protection module 130 uses any, or all, of the current FS data, the desired ΔFS 142, and estimated object trajectories 128 to compute whether the desired ΔFS 142 could lead to a risky situation (e.g., one where a collision between the air vehicle and an object is likely to occur) in the event of a hypothetical loss of propulsion.

If such collision risk is detected, the dynamic protection module 130 can take a number of actions to protect against an unwanted collision occurring between the air vehicle and object. For example, the dynamic protection module 130 can provide warnings 134 to the command and control module 140, which can in turn provide warnings to the pilot 102 (e.g., joystick vibration, counterforces, or any other suitable warnings known to those of ordinary skill in the art without undue experimentation).

Alternatively, or in addition, the dynamic protection module can automatically calculate a corrected ΔFS' 132 to reduce the collision risk. The dynamic protection module 130 can provide the corrected ΔFS' 132 to the command and control module 140 (e.g., along with any warnings 134). This can allow the pilot 102 to control the air vehicle to follow the suggested change in flight state indicated by the corrected ΔFS' 132.

Further, the dynamic protection module 130 can provide the corrected ΔFS' 132 to the flight control 122. The flight control 122 can control the actuators 124 (e.g., to change altitude, speed, course, or any other aspect) to modify the flight state. In an aspect, the actions taken by the dynamic protection module 130 when detecting a collision risk (e.g., whether to provide any, or all, of warnings, a recommended flight state change, or automated flight state change) can be configured. For example, a pilot 102, or any other suitable human operator, could configure the unmanned air vehicle system 100 to provide desired behavior if a possible collision risk is detected. Further, the dynamic protection module 130 can be configured to provide different responses (e.g., more, or less, aggressive flight state changes, preferring a change to one more particular aspects of flight state (e.g., altitude, speed, course) over other aspect(s), or any other suitable responses known to those of ordinary skill in the art without undue experimentation).

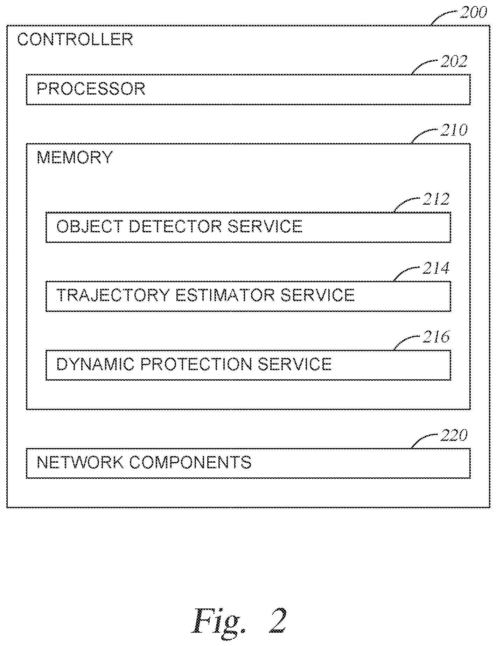

Figure 2 illustrates a block diagram of a controller 200 for controlling an unmanned air vehicle to avoid collision against objects on the ground, according to one aspect. In an aspect, the controller 200 includes a processor 202, a memory 210, and network components 220. The memory 210 may take the form of any non-transitory computer-readable medium known to those of ordinary skill in the art without undue experimentation. The processor 202 generally retrieves and executes programming instructions stored in the memory 210. The processor 202 is representative of a single central processing unit (CPU), multiple CPUs, a single CPU having multiple processing cores, graphics processing units (GPUs) having multiple execution paths, and the like.

The network components 220 include the components necessary for controller 200 to interface with a suitable communication network. For example, the network components 220 can include wired, WiFi, or cellular network interface components and associated software. Although the memory 210 is shown as a single entity, it will be understood by those of ordinary skill in the art without undue experimentation that the memory 210 may include one or more memory devices having blocks of memory associated with physical addresses, such as random access memory (RAM), read only memory (ROM), flash memory, or other types of volatile and/or non-volatile memory.

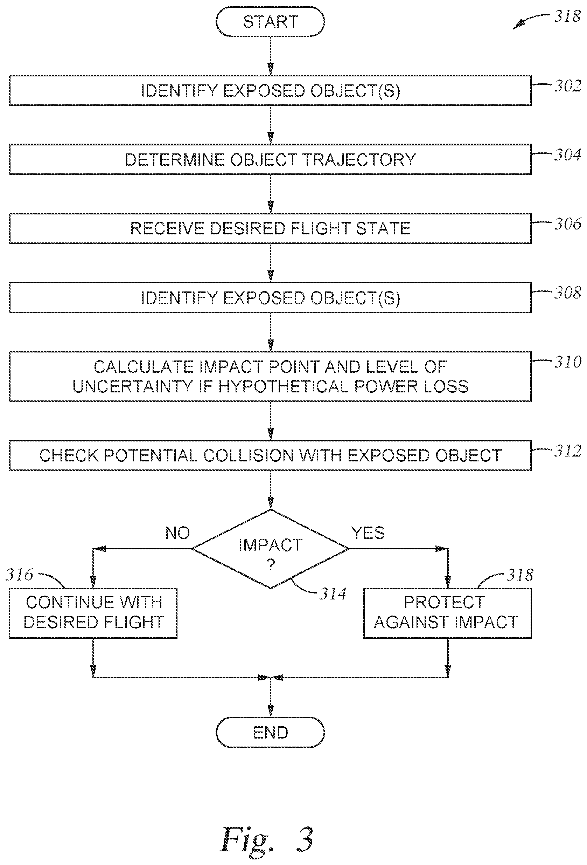

The memory 210 generally includes program code for performing various functions related to use of the controller 200. The program code is generally described as various functional "applications" or "modules" within the memory 210, although, as will be understood by those of ordinary skill in the art without undue experimentation, alternate implementations may have different functions and/or combinations of functions. Within the memory 210, an object detector service 212 facilitates exposed object detection (e.g., as discussed above in relation to block 114 illustrated in Figure 1 and further below in relation to Figure 3). A trajectory estimator service 214 facilitates estimating exposed object trajectories (e.g., as discussed above in relation to block 120 illustrated in Figure 1 and further below in relation to Figure 3). A dynamic protection service 216 facilitates providing dynamic protection for objects below an air vehicle (e.g., objects on the ground below a UAV) in the event of a hypothetical loss of propulsion (e.g., as discussed above in relation to block 130 illustrated in Figure 1 and further below in relation to Figure 3).

Although Figure 2 depicts the object detector service 212, trajectory estimator service 214, and dynamic protection service 216, as located in the memory 210, that representation is merely provided as an illustration for clarity. More generally, the controller 200 may include one or more computing platforms, such as computer servers for example, which may be co-located, or may form an interactively linked but distributed system, such as a cloud-based system (e.g., a public cloud, a private cloud, a hybrid cloud, or any other suitable cloud-based system). For example, the functionality of the object detector service 212, trajectory estimator service 214, and dynamic protection service 216 may be spread across an air vehicle, one or more ground control systems, and any other suitable computing systems. As a result, the processor 202 and the memory 210 may correspond to distributed processor and memory resources within one or more computing environments. Thus, it is to be understood by those of ordinary skill in the art without undue experimentation that any, or all, of the object detector service 212, trajectory estimator service 214, and dynamic protection service 216 may be stored remotely from the controller 200 within the distributed memory resources of one or more computing environments.

Figure 3 is a flowchart 300 illustrating controlling an unmanned air vehicle to avoid collision against objects on the ground, according to one aspect. At block 302 an object detector service (e.g., the object detector service 212 illustrated in Figure 2) identifies one or more exposed objects. For example, as discussed above in relation to block 114 illustrated in Figure 1, the object detector service can use suitable ML techniques to identify objects beneath an air vehicle.

In an aspect, the object detector service can detect static and moving objects using one or more on-board sensors, including but not limited to one or more cameras. The object detector service can detect and classify exposed objects based on purely visual data using one or more cameras on the visual spectrum. Alternatively, or in addition, the object detector service can use additional information such as LIDAR point clouds, radar, data or infrared imaging sensors. These are merely examples. Further, the object detection service can use ML for object detection and classification (e.g., a DNN or other suitable neural network or another trained ML model). This is also merely an example, and the object detection service can use any suitable technique (e.g., an algorithmic technique that does not use ML) known to those of ordinary skill in the art without undue experimentation.

At block 304, trajectory estimator service (e.g., the trajectory estimator service 214 illustrated in Figure 2) predicts trajectories for the one or more exposed objects. For example, as discussed above in relation to block 120 illustrated in Figure 1, the trajectory estimator service can use suitable ML techniques to identify the trajectories of moving objects identified at block 302.

In an aspect, the trajectory estimator service calculates the 4-dimenstional trajectory of these objects to predict their future position (e.g., using one or more suitable ML models). Further, the trajectory estimator service can use different techniques (e.g., different trained ML models) for different classifications of objects For example, different techniques could be used for walking pedestrians, cyclists, motorcyclists, automobiles, boats, or any other suitable moving objects.

In an aspect, the trajectory estimator service uses a temporal data sequence (e.g., a video or LIDAR frame sequence) to track exposed objects, identify the status of exposed objects (e.g., static or moving), and predict the trajectory of any moving exposed objects. Any suitable ML technique known to those of ordinary skill in the art without undue experimentation can be used. For example, an ML model (e.g., a DNN or other trained ML model) can be trained to take a sequence of data frames for each one of the detected objects and infer a prediction of the future trajectory of the objects. In an aspect, multiple data sources (e.g., data from multiple sensors or multiple types of sensor data) can be used enhance the accuracy of the prediction. This is merely an example, however, and the trajectory estimator service can use any suitable technique (e.g., any suitable ML technique or a non-ML technique) known to those of ordinary skill in the art without undue experimentation.

At block 306, a dynamic protection service (e.g., the dynamic protection service 216 illustrated in Figure 2) receives a desired flight state. For example, as discussed above in relation to block 142 illustrated in Figure 1, a pilot can provide ongoing commands (e.g., joystick commands), a pre-defined route, or both, to control an air vehicle (e.g., a UAV). The dynamic protection service can receive a desired flight state (e.g., a desired change to a current flight state or a desire to maintain flight conditions) reflecting these commands.

At block 308, the dynamic protection service identifies flight state. For example, as discussed above in relation to block 126 illustrated in Figure 1, the dynamic protection service can receive a current flight state (e.g., attitude, altitude, speed, wind speed, latitude, longitude, bearing, etc.). In an embodiment, the current flight state reflects any changes stemming from the corrected flight state. For example, the current flight state can reflect changes after a corrected ΔFS' 132, illustrated in Figure 1, is provided by the dynamic protection module 130 to the flight control unit 122.

At block 310, the dynamic protection service calculates a predicted collision point with any objects identified at block 302, and a level of uncertainty in the prediction, in the case of a hypothetical propulsion loss. For example, the dynamic protection service can use the identified objects and trajectories (e.g., determined at blocks 302 and 304, above), the current flight state (e.g., received at block 308 above), and the desired flight state (e.g., received at block 306 above) to estimate when, or if, the air vehicle might collide with the exposed objects if the air vehicle were to lose propulsion.

In an aspect, the dynamic protection service can use any, or all, of multiple different models to predict the collision point, including an uncontrolled gliding model for fixed wing air vehicle, a parabolic freefall model, an uncontrolled spin model, or any other suitable model known to those of ordinary skill in the art without undue experimentation. In one aspect, the dynamic protection service predicts collisions using all of these models. Alternatively, the dynamic protection service selects one or more preferred models (e.g., based on user commands, air vehicle characteristics, environmental characteristics, or any other suitable factors). Further, dynamic protection service can estimate the uncertainty of the prediction, based on the input values.

Further, in an embodiment, the dynamic protection service can calculate a predicted collision point using the identified objects but without predicted trajectories for all objects (e.g., using predicted trajectories for some, or none, of the objects). This could reduce the accuracy of the predicted collision point, however, requiring a larger safety buffer for a corrected flight state (e.g., when protecting against collision at block 318, discussed below). That is, the use of predicted trajectories might not be required or suitable for all circumstances, but where available can increase the accuracy of the predicted collision point and reduce the necessary safety buffer to avoid a collision between the air vehicle and an object.

At block 312, the dynamic protection service checks for a potential collision with an exposed object. At block 314, if the dynamic protection service predicts a collision, the flow moves to block 318.

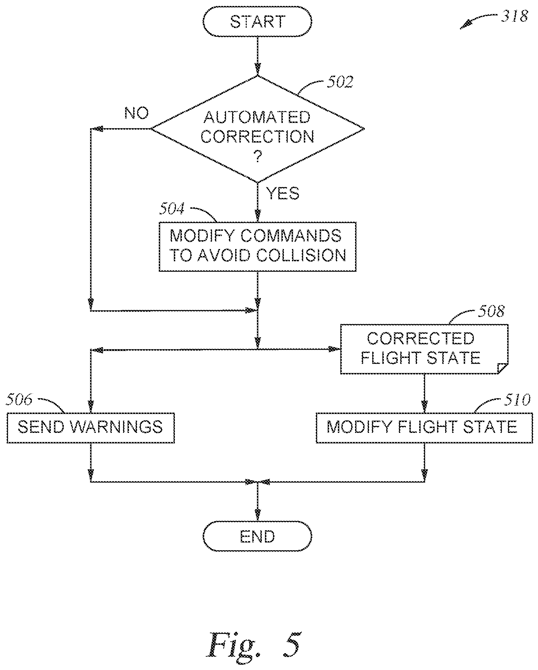

At block 318, the dynamic protection service protects against collisions. This is discussed further, below, with regard to Figure 5. For example, the dynamic protection service can provide a warning or other alert indicating a risk of collision to a pilot or other human operator. Alternatively, or in addition, the dynamic protection service can automatically control the air vehicle to avoid a collision or reduce the likelihood of a collision occuring.

Returning to block 314, if the dynamic protection service predicts no collision with any exposed objects, the flow proceeds to block 316. At block 316 the air vehicle continues with the desired flight (e.g., based on the desired flight state received at block 306). For example, the air vehicle can move as instructed by the pilot (e.g., based on joystick control or use of a pre-defined route).

In an embodiment, the techniques illustrated in Figure 3 are performed continuously in real-time during flight. One or more controllers (e.g., the controller 200 illustrated in Figure 2) continuously monitors for exposed objects and estimates trajectories. The dynamic protection service then identifies a risk of potential collision with the exposed objects, in the case of a hypothetical loss of propulsion, and protects against collisions.

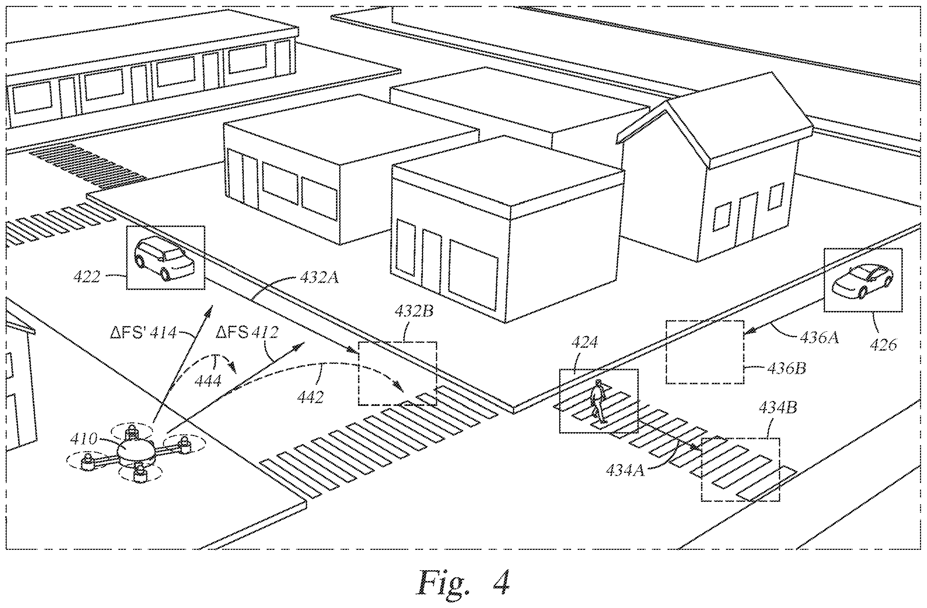

Figure 4 illustrates an example of controlling an unmanned air vehicle to avoid collision against objects on the ground, according to one aspect. Figure 4 illustrates an example urban environment 400 in which an air vehicle (e.g., a UAV) 410 is operating. The air vehicle 410 is proceeding on a flight state 412, if no action is taken. An object detector service (e.g., the object detector service 212 illustrated in Figure 2) identifies three potentially exposed objects: a car 422, a person 424, and another car 426. For example, the object detector service can use a suitable ML model (e.g., a DNN) to detect these objects from one or more sensors associated with the air vehicle 410 (e.g., cameras, infra-red sensors, LIDAR, radar, or any other suitable sensors). The object detector service can further use the ML model to classify the objects (e.g., classify the car 422, the person 424, and the other car 426).

In an aspect, a trajectory estimator service (e.g., the trajectory estimator service 214 illustrated in Figure 2) estimates the trajectories of each of the objects 422, 424, and 426. For example, the trajectory estimator service estimates the trajectory of the car 422 as the vector 432A leading to the location 432B. The trajectory estimator service estimates the trajectory of the person 424 as the vector 434A leading to the location 434B. The trajectory estimator service estimates the trajectory of the car other 426 as the vector 436A leading to the location 436B.

In an aspect, a dynamic protection service (e.g., the dynamic protection service 216 illustrated in Figure 2) determines whether the air vehicle 410 is at risk of colliding with any of the objects 422, 424, or 426, and takes steps to avoid a collision occurring. For example, the dynamic protection service calculates the estimated falling trajectory of the air vehicle 410 in the hypothetical event of a loss of propulsion as the curved dashed line 442.

The dynamic protection service predicts that the air vehicle 410 is at risk of colliding with the car 422 if it suddenly loses propulsion, and in turn takes steps to avoid the collision occurring. For example, the dynamic protection service can send commands to the air vehicle 410 (e.g., to actuators associated with the air vehicle 410) to change the flight state to a new flight state 414. A sudden loss of propulsion along the new flight state 414 would result in a different falling trajectory 444, in which the air vehicle 410 would not be at risk of colliding with the car 422 (or any other exposed object). Alternatively, or in addition, the dynamic protection service can provide warnings to a pilot to encourage the pilot to change the flight state of the air vehicle 410. The illustration in Figure 4 is merely one example, and, as would be known to those of ordinary skill in the art without undue experimentation, one or more techniques described herein can be applied for a variety of air vehicles (e.g., a variety of manned or unmanned flying vehicles) in a variety of environments.

Figure 5 is a flowchart illustrating protecting against collide by an unmanned air vehicle against objects on the ground, according to one aspect. In an aspect, Figure 5 corresponds with block 318 illustrated at Figure 3. At block 502, a dynamic protection service (e.g., the dynamic protection service 216 illustrated in Figure 2) determines whether to perform automated correction.

As discussed above, in one aspect the dynamic protection service can automatically correct a flight state of an air vehicle (e.g., a UAV) to avoid a risk of colliding with exposed objects, if a hypothetical loss of propulsion occurs. For example, the dynamic protection service can determine a modified flight state for the air vehicle that reduces the risk of colliding, and can control the air vehicle (e.g., using suitable actuators) to travel on the modified flight state. Alternatively, or in addition, the dynamic protection service can provide warnings to a human operator (e.g., a pilot) to control the air vehicle to reduce the risk of colliding.

In an aspect, automated correction is configurable (e.g., by a human administrator). Alternatively, or in addition, automated correction depends on characteristics of the air vehicle, the flying environment, or any other suitable factors known to those of ordinary skill in the art without undue experimentation. For example, automated correction could be enabled for particular air vehicles, types of air vehicles, or flying environments, and disabled for other scenarios. If automated correction is available, the flow proceeds to block 504. If not, the flow proceeds to block 506, discussed further below.

At block 504, the dynamic protection service modifies commands to avoid collision. In an aspect, the dynamic protection service generates a corrected flight state 508. For example, as illustrated in Figure 4, above, the corrected flight state 508 (e.g., the corrected flight state 414 illustrated in Figure 4) can reduce the risk of colliding with one or more exposed objects in case of a hypothetical loss of propulsion.

In an aspect, the dynamic protection service can calculate a suitable safety buffer to reduce the risk of collision. The safety buffer can be based on characteristics of the air vehicle (e.g., speed, size, fall speed), the exposed objects, the environment (e.g., wind speed), and any other suitable characteristics known to those of ordinary skill in the art without undue experimentation. Further, the safety buffer can be based on the certainty of the dynamic protection service's collision prediction. For example, as discussed above in relation to block 310 illustrated in Figure 3, the dynamic protection service can calculate a level of certainty for its prediction of a collision point with an exposed object. This level of certainty can be used to generate a safety buffer for the corrected flight state 508. A higher level of certainty can require a smaller safety buffer, while a lower level of certainly can require a larger safety buffer. Further, as discussed above, use of object trajectories can reduce the required safety buffer.

Further, the dynamic protection service can use any, or all, of multiple different falling models to predict the fall trajectory of the air vehicle and generate the corrected flight states. The dynamic protection service can use one or more of an uncontrolled gliding model for fixed wing air vehicle, a parabolic freefall model, an uncontrolled spin model, or any other suitable model known to those of ordinary skill in the art without undue experimentation. In an embodiment, the dynamic protection service selects one or more preferred models (e.g., based on user commands, air vehicle characteristics, environmental characteristics, or any other suitable factors known to those of ordinary skill in the art without undue experimentation). Further, the dynamic protection service can calculate collision points on the ground upon applying different potential modifications to the corresponding flight parameters (e.g. speed, altitude, heading, etc.) in order to find a preferred non-collision trajectory based on (customer) predefined preferences (e.g., using an iterative process).

At block 510, the dynamic protection service modifies the flight state of the air vehicle. In an aspect, the dynamic protection service provides the corrected flight state 508 to one or more flight control modules (e.g., the flight control module 122 illustrated in Figure 1). This controls suitable actuators (e.g., the actuators 124 illustrated in Figure 1) to change the flight state of the air vehicle.

Returning to block 504, in an aspect the dynamic protection service proceeds to block 506 and sends one or more warnings to human operators relating to the potential collision with an exposed object. The dynamic protection service can send the warning(s) in addition to automatically modifying the air vehicle flight state, or instead of automatically modifying the air vehicle flight state (e.g., if automated correction is not available).

At block 506 the dynamic protection service can provide warnings or joystick counterforce to a pilot (e.g., warnings 144 illustrated in Figure 1). The pilot can then control the air vehicle to reduce the collision risk. Further, in an aspect, the dynamic protection service can provide the corrected flight state (e.g., in a human readable format) to the pilot to assist the pilot in controlling the air vehicle. The pilot can follow the corrected flight state (e.g., altitude, speed, direction) to reduce the risk of collision.

## Claims

1. A method, comprising:
receiving a flight state for an air vehicle (306);
identifying an object on the ground, using one or more sensors (302);
determining a risk that the air vehicle will collide with the object should the air vehicle later lose propulsion (310); and
protecting against the air vehicle colliding with the object, based on the determined risk (318).

2. The method of claim 1, wherein the air vehicle comprises an unmanned aerial vehicle (UAV) (100, 410), the method further comprising:
determining a predicted trajectory for the object (304, 432A, 434A, 436A), wherein determining the risk that the UAV will collide with the object is further based, at least in part, on the predicted trajectory (310).

3. The method of claim 2, wherein identifying the object uses a first one or more trained machine learning (ML) models (302) and determining the predicted trajectory uses a second one or more trained ML models (304).

4. The method of claim 3, wherein the first and second one or more trained ML models each comprise respective deep learning neural networks (DNNs) (302, 304).

5. The method of any of claims 1 to 4, wherein the one or more sensors (112) comprise at least one of: (i) a visual spectrum camera, (ii) an infra-red sensor, (iii) LIDAR, or (iv) radar.

6. The method of any of claims 1 to 5, wherein protecting against the air vehicle colliding with the object comprises:
generating a corrected flight state for the air vehicle (508); and
automatically controlling the air vehicle to operate using the corrected flight state (510).

7. The method of claim 6, wherein generating the corrected flight state for the air vehicle further comprises:
generating a safety buffer for the air vehicle and the object, wherein the corrected flight state is based on the safety buffer (508).

8. The method of any of claims 1 to 7, wherein protecting against the air vehicle colliding with the object comprises:
transmitting a warning to a pilot for the air vehicle reflecting the risk that the air vehicle will collide with the object should the air vehicle later lose propulsion (506).

9. The method of claim 8, wherein protecting against the air vehicle colliding with the object further comprises:
generating a corrected flight state for the air vehicle (508); and
providing at least a portion of the corrected flight state to the pilot (506, 508).

10. A non-transitory computer-readable medium containing computer program code that, when executed by operation of one or more computer processors, performs operations comprising:
receiving a flight state for an air vehicle (306);
identifying an object on the ground, using one or more sensors (302);
determining a risk that the air vehicle will collide with the object should the air vehicle later lose propulsion (310); and
protecting against the air vehicle colliding with the object, based on the determined risk (318).

11. The non-transitory computer-readable medium of claim 10, wherein the air vehicle comprises an unmanned aerial vehicle (UAV) (100, 410), the operations further comprising:
determining a predicted trajectory for the object (304, 432A, 434A, 436A), wherein determining the risk that the UAV will collide with the object is further based on the predicted trajectory (310), wherein identifying the object uses a first one or more trained machine learning (ML) models (302) and determining the predicted trajectory uses a second one or more trained ML models (304), in particular wherein determining the risk that the air vehicle will collide with the object should the UAV later lose propulsion comprises using a falling model for the air vehicle (310).

12. The non-transitory computer-readable medium of claim 10 or 11, wherein protecting against the air vehicle colliding with the object comprises:
generating a corrected flight state for the air vehicle (508); and
automatically controlling the air vehicle to operate using the corrected flight state (510).

13. An unmanned aerial vehicle (UAV), comprising:
a computer processor (202); and
a memory (210) having instructions stored thereon which, when executed on the computer processor, performs operations comprising:
identifying a flight state for the UAV (306);
receiving a corrected flight state for the UAV (508), wherein the corrected flight state is calculated based on identifying an object on the ground using one or more sensors (110) and determining a risk that the UAV will collide with the object should the UAV later lose propulsion (310); and
automatically controlling the UAV to operate using the corrected flight state (510).

14. The UAV of claim 13, wherein the corrected flight state (508) is further based, at least in part, on determining a predicted trajectory for the object (304, 432A, 434A, 436A) and wherein identifying the object uses a first one or more trained machine learning (ML) models (302) and determining the predicted trajectory uses a second one or more trained ML models (304).

15. The UAV of claim 13 or 14, wherein the one or more sensors (110) comprise at least one of: (i) a visual spectrum camera, (ii) an infra-red sensor, (iii) LIDAR, or (iv) radar.

## Patentansprüche

1. Verfahren, aufweisend:
Empfangen eines Flugzustands für ein Luftfahrzeug (306);
Identifizieren eines Objekts auf dem Boden unter Verwendung von einem oder mehreren Sensoren (302);
Bestimmen eines Risikos, dass das Luftfahrzeug mit dem Objekt kollidiert, falls das Luftfahrzeug später Antrieb verliert (310); und
Schützen gegen das Kollidieren des Luftfahrzeugs mit dem Objekt basierend auf dem bestimmten Risiko (318).

2. Verfahren nach Anspruch 1, wobei das Luftfahrzeug ein unbemanntes Luftfahrzeug (UAV) (100, 410) aufweist, des Weiteren aufweisend:
Bestimmen einer vorhergesagten Flugbahn für das Objekt (304, 432A, 434A, 436A), wobei das Bestimmen des Risikos, dass das UAV mit dem Objekt kollidiert, des Weiteren zumindest teilweise basierend auf der vorhergesagten Flugbahn erfolgt (310).

3. Verfahren nach Anspruch 2, wobei das Identifizieren des Objekts ein erstes eines oder mehrerer trainierter Maschinenlern(ML)-Modelle (302) verwendet und das Bestimmen der vorhergesagten Flugbahn ein zweites eines oder mehrerer trainierter Maschinenlern(ML)-Modelle (304) verwendet.

4. Verfahren nach Anspruch 3, wobei das erste und zweite eines oder mehrere trainierte Maschinenlern(ML)-Modelle jeweils entsprechende Deep-Learning-Neuronale-Netzwerke (DNNs) (302, 304) aufweisen.

5. Verfahren nach einem der Ansprüche 1 bis 4, wobei die ein oder mehreren Sensoren (112) zumindest eines von Folgendem aufweisen: (i) eine Kamera für den sichtbaren Bereich, (ii) einen Infrarotsensor, (iii) LIDAR oder (iv) Radar.

6. Verfahren nach einem der Ansprüche 1 bis 5, wobei das Schützen gegen das Kollidieren des Luftfahrzeugs mit dem Objekt aufweist:
Erzeugen eines korrigierten Flugzustands für das Luftfahrzeug (508); und
automatisches Steuern des Luftfahrzeugs zum Betrieb unter Verwendung des korrigierten Flugzustands (510).

7. Verfahren nach Anspruch 6, wobei das Erzeugen des korrigierten Flugzustands für das Luftfahrzeug des Weiteren aufweist:
Erzeugen eines Sicherheitsabstands für das Luftfahrzeug und das Objekt, wobei der korrigierte Flugzustand basierend auf dem Sicherheitsabstand ist (508).

8. Verfahren nach einem der Ansprüche 1 bis 7, wobei das Schützen gegen das Kollidieren des Luftfahrzeugs mit dem Objekt aufweist:
Übertragen einer Warnung an einen Piloten für das Luftfahrzeug, die das Risiko widerspiegelt, dass das Luftfahrzeug mit dem Objekt kollidieren wird, falls das Luftfahrzeug später Antrieb verliert (506).

9. Verfahren nach Anspruch 8, wobei das Schützen gegen das Kollidieren des Luftfahrzeugs mit dem Objekt des Weiteren aufweist:
Erzeugen eines korrigierten Flugzustands für das Luftfahrzeug (508); und
Bereitstellen von zumindest einem Teil des korrigierten Flugzustands an den Piloten (506, 508).

10. Nicht-flüchtiges computerlesbares Medium, das Computerprogrammcode enthält, der, wenn er durch den Betrieb von einem oder mehreren Computerprozessoren ausgeführt wird, Operationen aufweist, aufweisend:
Empfangen eines Flugzustands für ein Luftfahrzeug (306);
Identifizieren eines Objekts auf dem Boden unter Verwendung von einem oder mehreren Sensoren (302);
Bestimmen eines Risikos, dass das Luftfahrzeug mit dem Objekt kollidiert, falls das Luftfahrzeug später Antrieb verliert (310); und
Schützen gegen das Kollidieren des Luftfahrzeugs mit dem Objekt basierend auf dem bestimmten Risiko (318).

11. Nicht-flüchtiges computerlesbares Medium nach Anspruch 10, wobei das Luftfahrzeug ein unbemanntes Luftfahrzeug (UAV) (100, 410) aufweist, wobei die Operationen des Weiteren aufweisen:
Bestimmen einer vorhergesagten Flugbahn für das Objekt (304, 432A, 434A, 436A), wobei das Bestimmen des Risikos, dass das UAV mit dem Objekt kollidiert, des Weiteren basierend auf der vorhergesagten Flugbahn erfolgt (310), wobei das Identifizieren des Objekts ein erstes eines oder mehrerer trainierter Maschinenlern(ML)-Modelle (302) verwendet und das Bestimmen der vorhergesagten Flugbahn ein zweites eines oder mehrerer trainierter Maschinenlern(ML)-Modelle (304) verwendet, insbesondere wobei das Bestimmen des Risikos, dass das Luftfahrzeug mit dem Objekt kollidiert, falls das UAV später Antrieb verliert, die Verwendung eines Fallmodells für das Luftfahrzeug aufweist (310).

12. Nicht-flüchtiges computerlesbares Medium nach Anspruch 10 oder 11, wobei das Schützen gegen das Kollidieren des Luftfahrzeugs mit dem Objekt aufweist:
Erzeugen eines korrigierten Flugzustands für das Luftfahrzeug (508); und
automatisches Steuern des Luftfahrzeugs zum Betrieb unter Verwendung des korrigierten Flugzustands (510).

13. Unbemanntes Luftfahrzeug (UAV), aufweisend:
einen Computerprozessor (202); und
einen Speicher (210), auf dem Anweisungen gespeichert sind, die, wenn sie auf dem Computerprozessor ausgeführt werden, Operationen ausführen, aufweisend:
Identifizieren eines Flugzustands für das UAV (306);
Empfangen eines korrigierten Flugzustands für das UAV (508), wobei der korrigierte Flugzustand basierend auf dem Identifizieren eines Objekts auf dem Boden unter Verwendung von einem oder mehreren Sensoren (110) und dem Bestimmen eines Risikos berechnet wird, dass das UAV mit dem Objekt kollidiert, falls das UAV später Antrieb verliert (310); und
automatisches Steuern des UAV zum Betrieb unter Verwendung des korrigierten Flugzustands (510).

14. UAV nach Anspruch 13, wobei der korrigierte Flugzustand (508) des Weiteren zumindest teilweise basierend auf dem Bestimmen einer vorhergesagten Flugbahn für das Objekt (304, 432A, 434A, 436A) ist und wobei das Identifizieren des Objekts ein erstes eines oder mehrerer trainierter Maschinenlern(ML)-Modelle (302) verwendet und das Bestimmen der vorhergesagten Flugbahn ein zweites eines oder mehrerer trainierter Maschinenlern(ML)-Modelle (304) verwendet.

15. UAV nach Anspruch 13 oder 14, wobei die ein oder mehreren Sensoren (110) zumindest eines von Folgendem aufweisen: (i) eine Kamera für den sichtbaren Bereich, (ii) einen Infrarotsensor, (iii) LIDAR oder (iv) Radar.

## Revendications

1. Procédé, comprenant :
la réception d'un état de vol pour un véhicule aérien (306) ;
l'identification d'un objet sur le sol, à l'aide d'un ou de plusieurs capteurs (302) ;
la détermination d'un risque que le véhicule aérien entre en collision avec l'objet si le véhicule aérien perd ensuite sa propulsion (310) ; et
la protection contre la collision du véhicule aérien avec l'objet, sur la base du risque déterminé (318).

2. Procédé selon la revendication 1, dans lequel le véhicule aérien comprend un véhicule aérien sans pilote (UAV) (100, 410), le procédé comprenant en outre :
la détermination d'une trajectoire prévue pour l'objet (304, 432A, 434A, 436A), dans lequel la détermination du risque de collision de l'UAV avec l'objet est en outre basée, au moins en partie, sur la trajectoire prévue (310).

3. Procédé selon la revendication 2, dans lequel l'identification de l'objet utilise un premier ou plusieurs modèles d'apprentissage automatique (ML) entraînés (302) et la détermination de la trajectoire prédite utilise un ou plusieurs modèles ML entraînés (304).

4. Procédé selon la revendication 3, dans lequel les premier et second modèles ML entraînés comprennent chacun des réseaux neuronaux d'apprentissage profond (DNN) respectifs (302, 304).

5. Procédé selon l'une quelconque des revendications 1 à 4, dans lequel le ou les capteurs (112) comprennent au moins l'un parmi : (i) une caméra à spectre visuel, (ii) un capteur infrarouge, (iii) un LIDAR, ou (iv) un radar.

6. Procédé selon l'une quelconque des revendications 1 à 5, dans lequel la protection contre la collision du véhicule aérien avec l'objet comprend :
la génération d'un état de vol corrigé pour le véhicule aérien (508) ; et
la commande automatique du fonctionnement du véhicule aérien à l'aide de l'état de vol corrigé (510).

7. Procédé selon la revendication 6, dans lequel la génération de l'état de vol corrigé pour le véhicule aérien comprend en outre :
la génération d'un tampon de sécurité pour le véhicule aérien et l'objet, dans lequel l'état de vol corrigé est basé sur le tampon de sécurité (508).

8. Procédé selon l'une quelconque des revendications 1 à 7, dans lequel la protection contre la collision du véhicule aérien avec l'objet comprend :
la transmission d'un avertissement à un pilote du véhicule aérien reflétant le risque que le véhicule aérien entre en collision avec l'objet si le véhicule aérien perd ensuite sa propulsion (506).

9. Procédé selon la revendication 8, dans lequel la protection contre la collision du véhicule aérien avec l'objet comprend en outre :
la génération d'un état de vol corrigé pour le véhicule aérien (508) ; et
la fourniture au pilote (506, 508) d'au moins une partie de l'état de vol corrigé.

10. Support non transitoire lisible par ordinateur contenant un code de programme informatique qui, lorsqu'il est exécuté par une opération d'un ou de plusieurs processeurs informatiques, réalise des opérations comprenant :
la réception d'un état de vol pour un véhicule aérien (306) ;
l'identification d'un objet sur le sol, à l'aide d'un ou de plusieurs capteurs (302) ;
la détermination d'un risque que le véhicule aérien entre en collision avec l'objet si le véhicule aérien perd ensuite sa propulsion (310) ; et
la protection contre la collision du véhicule aérien avec l'objet, sur la base du risque déterminé (318).

11. Support non transitoire lisible par ordinateur selon la revendication 10, dans lequel le véhicule aérien comprend un véhicule aérien sans pilote (UAV) (100, 410), les opérations comprenant en outre :
la détermination d'une trajectoire prédite pour l'objet (304, 432A, 434A, 436A), dans lequel la détermination du risque que l'UAV entre en collision avec l'objet est également basée sur la trajectoire prédite (310), dans lequel l'identification de l'objet utilise un premier ou plusieurs modèles d'apprentissage automatique (ML) entraînés (302) et la détermination de la trajectoire prédite utilise un second modèle ML entraîné (304) ou plus, en particulier dans lequel la détermination du risque que le véhicule aérien entre en collision avec l'objet si l'UAV perd ensuite sa propulsion comprend l'utilisation d'un modèle de chute pour le véhicule aérien (310).

12. Support non transitoire lisible par ordinateur selon la revendication 10 ou 11, dans lequel la protection contre la collision du véhicule aérien avec l'objet comprend :
la génération d'un état de vol corrigé pour le véhicule aérien (508) ; et
la commande automatique du fonctionnement du véhicule aérien à l'aide de l'état de vol corrigé (510).

13. Véhicule aérien sans pilote (UAV), comprenant :
un processeur informatique (202) ; et
une mémoire (210) dans laquelle sont stockées des instructions qui, lorsqu'elles sont exécutées sur le processeur informatique, réalisent des opérations comprenant :
l'identification d'un état de vol pour l'UAV (306) ;
la réception d'un état de vol corrigé pour l'UAV (508), dans lequel l'état de vol corrigé est calculé sur la base de l'identification d'un objet sur le sol à l'aide d'un ou de plusieurs capteurs (110) et de la détermination d'un risque de collision de l'UAV avec l'objet si l'UAV perd ensuite sa propulsion (310) ; et
la commande automatique de l'UAV pour qu'il fonctionne à l'aide de l'état de vol corrigé (510).

14. UAV selon la revendication 13, dans lequel l'état de vol corrigé (508) est en outre basé, au moins en partie, sur la détermination d'une trajectoire prédite pour l'objet (304, 432A, 434A, 436A) et dans lequel l'identification de l'objet utilise un premier ou plusieurs modèles d'apprentissage automatique (ML) entraînés (302) et la détermination de la trajectoire prédite utilise un second ou plusieurs modèles ML entraînés (304).

15. UAV selon la revendication 13 ou 14, dans lequel le ou les capteurs (110) comprennent au moins l'un parmi : (i) une caméra à spectre visuel, (ii) un capteur infrarouge, (iii) un LIDAR, ou (iv) un radar.
